# EUROPEAN PATENT SPECIFICATION

(11) **EP 3 995 254 B1**
(45) Date of publication and mention of the grant of the patent: **14.12.2022**
(21) Application number: 20382963.5
(22) Date of filing: 06.11.2020
(51) Int. Cl.: B23Q 1/70, B23Q 3/12, B23Q 5/04

(54) **HYBRID MACHINE TOOL FOR MILLING AND BORING**
HYBRIDE WERKZEUGMASCHINE FÜR FRÄS- UND BOHRWERKE
MACHINE-OUTIL HYBRIDE POUR FRAISER ET ALÉSER

(43) Date of publication of application: 11.05.2022
(73) Proprietor: Nicolas Correa, S.A., 09007 Burgos (ES)
(72) Inventor: SÁNCHEZ GARCÍA, Luis Miguel, 09007 BURGOS (BURGOS) (ES); HERNANDO SAIZ, Francisco Javier, 09007 BURGOS (BURGOS) (ES)
(74) Representative: Capitán García, Maria Nuria

(56) References cited:
- EP-A1- 0 528 579
- ES-T3- 2 531 563

## Description

### TECHNICAL FIELD OF THE INVENTION

The present invention is encompassed in the field of machine tools, specifically the heads and components that enable the machine to be used for both milling and similar tasks, as well as hole boring.

### BACKGROUND OF THE INVENTION

Nowadays, and especially when it comes to machine tools with a large volume of work, from 20 m³ of machinable part, it is not practical to have one machine for boring and another for milling, but rather a single machine that can do both. There may be two different approaches:
- boring machine with milling functionalities; advantages: optimal boring capacity, availability of the working axis (W axis), the axial movement of the boring bar; disadvantages: in milling, speed of rotation limitation due to the speed limitation of the boring bar bearings, the milling tool is too far from the front of the bar carriage, which makes it difficult to access the surfaces to be machined, in large parts;
- milling machine with boring head; advantages: optimal speed of rotation and machine approach for milling; disadvantages: boring head without W axis, the boring tool is offset forward, relative to the milling tool, which causes difficult access when boring deep holes.

This second type of milling machine with boring head is commonly called a hybrid machine.

Boring heads for milling machines can be divided according to their type of drive into:
- traditional drive, the motor and the gearbox are placed on an axis parallel to the axis of the boring bar; advantages: it is a highly proven solution, it uses a standard motor (reliability, optimised cost,...), tool clamping is very simple; disadvantages: it needs some space, gears in the casing of the bar, which needs to be lubricated, and a higher speed of rotation (when a milling head is available) requires lessening the rigidity of the bar bearings, thus reducing their boring capacity and the surface quality of the machined part;
- in line drive, the motor and the gearbox are positioned on the same axis as the boring bar; advantages: takes up little space; disadvantages: the motor must be a hollow shaft motor, the gearbox is very complex (epicyclic and hollow shaft), the guides of the W axis must withstand the reaction of the torque, maintenance becomes very complicated and raising the speed of rotation (when a milling head is available) requires lessening the rigidity of the bar bearings, reducing its boring capacity and the surface quality of the machined part;
- direct drive, the rotor of the motor is the casing of the boring bar; advantages: it takes up little space, is very simple and reliable, due to the absence of a gearbox, which also improves the surface finish of the parts and is easy to maintain; disadvantages: heat from the motor is transmitted to the bar, which can reduce machining precision, the motor is not commercial (risk of lower reliability, less optimised cost) and raising the speed of rotation (when a milling head is available) requires lessening the rigidity of the bar bearings, reducing their boring capacity and the surface quality of the machined part.

Thus, in common with these three types, in a hybrid machine tool with interchangeable milling heads the most widespread solution is to couple the heads to the outside of the boring bar, whereby, in addition to the aforementioned disadvantages, there is the additional disadvantage that, if the boring bar fails, the machine stops and becomes unusable.

The relationship between the bearings, the rigidity and the speed of rotation is explained below: today the standard of maximum speed of rotation of the transmission shaft in a milling machine, in the case of mechanical transmission, is 5,000-6,000 rpm (revolutions per minute), having runs of up to 10,000 rpm, while in a boring machine it does not exceed 3,000 rpm (normally for boring bars over 150 mm diameter) . This is so given the available bearing technology, since the boring bar is materialised by a bar guided, in its axial movement, in a casing, which is what receives the rotary movement of the motor and transmits it to the bar, i.e., the casing is what rotates and through which the bar runs. This casing is supported on bearings with an internal diameter of at least 200 mm, which have to provide sufficient load capacity and rigidity to be able to work the tool cantilevered up to more than 1 m, which limits the capacity for a high speed of rotation of the bearings, especially due to their diameter. On the other hand, in a milling head, the bearings are closer to the tool, overhangs less than 300 mm, and bearings with an internal diameter of the order of 100 mm can be installed, which makes it possible to achieve significantly higher speeds of rotation.

Two solutions are known to solve the problem of the maximum speed of rotation:
- reducing the rigidity of the bearings, thereby reducing the capacity for their use in roughing operations, and although the maximum speed of rotation is increased, it does not reach 4,000 rpm, still far from those offered by the milling heads, so the optimal throughput of modern milling tools cannot be attained;
- using a variable preload system for the bearings, so as to have optimal rigidity in boring operations, in milling operations speeds of rotation of the order of 4,000 rpm can be achieved, reducing the preload on the bearings, considering boring bars with a diameter of 150 mm or greater; this option is more complicated, with more longterm reliability problems, increasing the likelihood of a breakdown that could leave the machine idle for days or weeks.

The patent with publication number ES2531563T3 and title "Machine tool with retractable shank" is known. It describes a drive that is not aligned with the boring bar, which requires a transmission with gears, said bar is always included in the ram of the machine and is axially movable, in one embodiment it has two bars, providing an added front that is removed when working with a milling head is desired.

### DESCRIPTION OF THE INVENTION

The present invention is established and characterised in the independent claim 1, while the dependent claims describe other characteristics thereof.

The object of the invention is a hybrid machine tool that can be used both for milling and similar tasks, as well as for boring holes. The technical problem to be solved is to configure said machine to solve the disadvantages of the state of the art, making it simpler and more versatile.

In view of the foregoing, the present invention relates to a hybrid machine tool for milling and boring that comprises a first carriage capable of movement in at least one of the three axes X, Y, Z, with a first head assembly face and a longitudinal axis, as known in the state of the art. The machine tool is characterised in that it further comprises the second carriage arranged in the first carriage, the first carriage comprises at least guide means arranged parallel to the longitudinal axis, the second carriage can move on the guide means along the direction of the longitudinal axis, the second carriage comprises rotation drive means with a first shaft, normally called output shaft, with a working axis parallel to the longitudinal axis and a coupling arranged at the end of the first shaft oriented towards the first assembly face of the first carriage; a boring head comprising a first support with a second assembly face, a casing arranged inside the first support, bearings between the first support and the casing, and a boring bar inside the casing capable of moving relative thereto; a milling head comprising a third assembly face, a second support, and a second shaft; such that when the boring head or the milling head is mounted on the first carriage, the second or third assembly face is in contact with the first assembly face, the boring bar or the second shaft is aligned with the first shaft and its working axis, and the coupling is configured to be able to be attached directly to the boring bar of the boring head or to the second shaft of the milling head (4).

The "first carriage" can be any element of the machine to which it is then possible to couple a boring or milling head. Thus, it depends on the configuration of the machine; for example, it can be a carriage that moves on a column of a machine, or it can be a ram that can move on said carriage; the movement of the second carriage, in being comprised in the first carriage, can occur in any of the X, Y or Z axes. When describing that the second carriage can move on the guide means, this is not intended to exclusively limit the spatial position of the second carriage to be arranged on, or above, the guide means, but rather must be interpreted in a broader way, as via such means. The milling head can have any configuration; it is common to have several different milling heads available for a single machine tool.

An advantage is that the speed of rotation of the milling head is not limited by the boring head, since the bearings between the first support and the boring head casing that support the rotation of the boring bar are, all of them, housed in the boring head; when this head is removed and a milling head is coupled, the maximum achievable speed of rotation is not limited by the boring head and its bearings, it is limited only by the characteristics of the milling head itself, therefore it is possible to drive the milling head with a speed of rotation of, for example, 6,000 rpm.

Another advantage is that by fully removing the boring head, when the milling head is coupled, it can occupy part of the volume of the boring head, whereby the movement of the milling tool and the boring tool can be optimally adjusted in the design phase of the heads, ensuring that deep hole boring capacities are optimised and simultaneously so is the milling capacity of the outer faces of the part to be machined.

Another advantage is that the boring head is very simple, since it only includes a casing, with the appropriate bearings, to guide the bar and the joining interface, or coupling, of the head to the second carriage. The boring bar itself is equipped with the coupling interface to the tool rotation transmission system provided by the rotation drive means of the second carriage; it is also usually equipped with the tool lock activation and deactivation system and the transmission of cutting fluid, all coaxial to the rotation of the boring bar itself. Similarly, the milling head does not require any special configuration and is equipped with the joining interface, or coupling, to the second carriage, and the coupling interface to the tool rotation transmission system provided by the rotation drive means of the second carriage.

Another advantage is that the rotation drive is applied directly to the boring bar, instead of to the casing thereof, as is typical in the state of the art.

Another advantage is that if the boring bar is to be repaired, the machine can work with the rest of the heads while the bar is being repaired, as the boring head is completely removed and does not influence the configuration for coupling a milling head.

Another advantage is that it is usually attachable with slight changes to any existing head system.

With all this, a simple and, therefore, reliable solution is achieved.

### BRIEF DESCRIPTION OF THE DRAWINGS

This specification is supplemented by a set of drawings illustrating the preferred example and never intended to limit the invention.
Figure 1 represents a profile view of a first carriage sectioned in such a way that a second carriage can be seen inside, in addition a mounted boring head is represented. The double arrow represents the possibility of translational movement of the second carriage.
Figure 2 represents the configuration of Figure 1 in which the boring head has been replaced by a milling head.
Figure 3 represents a sectional profile view of the boring head of Figure 1.

### DETAILED DESCRIPTION OF THE INVENTION

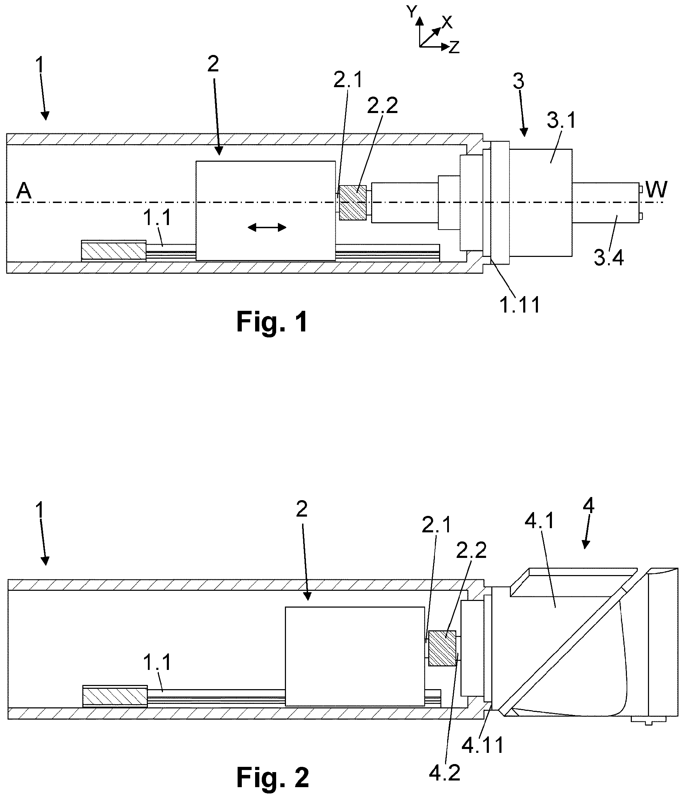

The invention is a hybrid machine tool for milling and boring that comprises a first carriage (1) capable of movement in at least one of the three axes X, Y, Z, the usual ones represented in Figure 1, with a first head assembly face (1.11) and a longitudinal axis (A), a second carriage (2) arranged in the first carriage (1), the first carriage (1) comprises at least guide means (1.1) arranged parallel to the longitudinal axis (A), the second carriage (2) can move on the guide means (1.1) along the direction of the longitudinal axis (A), the second carriage (2) comprises rotation drive means with a first shaft (2.1), output shaft, with a working axis (W) parallel to the longitudinal axis (A), in the embodiment shown both axes are coincident, and a coupling (2.2) is arranged at the end of the first shaft (2.1) oriented towards the first assembly face (1.11) of the first carriage (1), as seen in Figure 1.

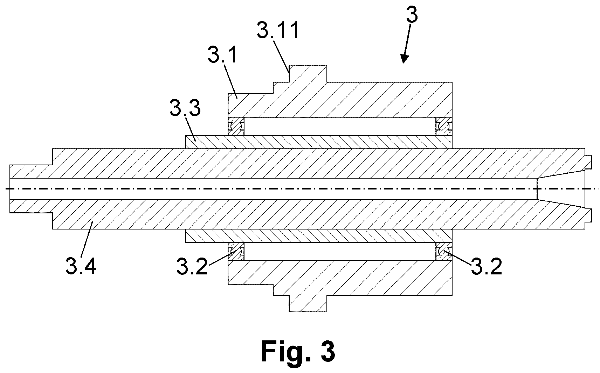

Figure 3 shows a boring head (3) comprising a first support (3.1) with a second assembly face (3.11), a casing (3.3) arranged inside the first support (3.1), bearings (3.2) between the first support (3.1) and the casing (3.3), and a boring bar (3.4) inside the casing (3.3) capable of moving relative thereto.

Figure 2 shows a milling head (4) comprising a third assembly face (4.11), a second support (4.1) and a second shaft (4.2).

When the boring head (3) or the milling head (4) is mounted on the first carriage (1), the second (3.11) or third assembly face (4.11), as appropriate, is in contact with the first assembly face (1.11), the boring bar (3.4) or the second shaft (4.2) is aligned with the first shaft (2.1) and its working axis (W), and the coupling (2.2) is configured to be able to be attached directly to the boring bar (3.4) of the boring head (3), Figure 1, or to the second shaft (4.2) of the milling head (4), Figure 2.

When the second carriage (2) is coupled to the boring head (3), Figure 1, said second carriage (2) can move in translation, in a controlled manner, within the limits of travel that the boring bar (3.4) has inside the casing (3.3) of the boring head (3). When a milling head (4) is coupled, Figure 2, the second carriage (2) is positioned in the appropriate position of the second shaft (4.2), since the latter cannot move in translation and is fixed with respect to the milling head (4), unlike the translation of the boring bar (3.4) with respect to the boring head (3).

One embodiment option is for the guide means (1.1) to be a friction guide, a hydrostatic guide, an aerostatic guide or a rolling guide, which are known arrangements. The friction guide is the most traditional and reliable of those mentioned, but also the one with the most friction, which can make precise positioning difficult. Hydrostatic guides have a lot of transverse damping and a long life, although technically complicated. Aerostatic guides are very precise, but have low rigidity. Rolling guides are a compromise between damping, rigidity, friction and reliability, further providing ease and simplicity of design and assembly. Specifically, this rolling guide may comprise one or more rails, represented in Figures 1 and 2, for recirculating balls or rollers with their corresponding runners.

Another option, not represented in the figures, is that the rotation drive means be a motor directly connected to the first shaft (2.1). An advantage of such configuration is that, since there are no gears, transmission is very smooth and the surface finish of the workpiece is better than when there are gears. In addition, since there are no gears, lubrication and cooling is easier. In detail, the electrical configuration of the motor in this configuration can correspond to the usual one for a single motor or to that of several motors connected in parallel.

Another alternative option, not represented in the figures, is that the rotation drive means be a motor with a gearbox. An advantage of this configuration is that since there is a reduction in the speed of rotation thanks to the gears, very high torques can be reached in the tool, to work with high power at a low tool speed of rotation.

Another alternative option, not represented in the figures, is that the rotation drive means consist of several motors in parallel. An advantage of this configuration is that, in addition to the smoothness and simplicity of the directly connected motor, by using several motors it is possible to have a sufficiently high torque to meet the high requirements, thus being able to work at a low tool speed of rotation.

A detail of the coupling (2.2) is that it is torsionally and axially rigid, with radial flexibility to absorb misalignments between the first shaft (2.1) and the boring bar (3.4) or the second shaft (4.2).

A detail in relation to the transmission of rotation between the boring bar (3.4) and its casing (3.3), is that the outer profile of the boring bar (3.4), as well as the inner profile of the casing (3.3), is a trilobular rather than cylindrical profile, which makes it unnecessary to have other configurations added to transmit the rotation.

Another advantageous option is that the first carriage (1), the boring head (3) and the milling head (4) are adapted to join the latter two to the first carriage (1) by means of automatic fastening means, not represented in the figures.

Another advantageous option is that the first carriage (1), the boring head (3) and the milling head (4) are adapted to join the latter two to the first carriage (1) by means of automatic electrical connection means, not shown in the figures, suitable to automatically make the electrical connections appropriate to the needs of the heads (3,4), such as: motion motors, measurement systems, temperature sensors, position sensors, etc.

Another advantageous option is that the first carriage (1), the boring head (3) and the milling head (4) are adapted to join the latter two to the first carriage (1) by means of automatic pneumatic and/or hydraulic connection means, not represented in the figures, adapted to the needs of the heads (3,4), such as: locking systems, tool clamping systems, automatic lubrication circuits, tool cooling, bearing cooling, overpressure sealing circuits, etc.

Another advantageous option is that the first assembly face (1.11) of the first carriage (1), the second assembly face (3.11) of the first support (3.1) of the boring head (3) and the third assembly face (4.11) of the milling head (4) are provided with Hirth teeth, not represented in the figures, arranged circumferentially and equidistant from the longitudinal axis (A), so that they allow the centring of the boring head (3) and the milling head (4) with respect to the first carriage (1).

## Claims

1. Hybrid machine tool for milling and boring that comprises a first carriage (1) capable of movement in at least one of the three axes X, Y, Z, with a first head assembly face (1.11) and a longitudinal axis (A); a second carriage (2) arranged in the first carriage (1), the first carriage (1) comprises at least guide means (1.1) arranged parallel to the longitudinal axis (A), the second carriage (2) can move on the guide means (1.1) along the direction of the longitudinal axis (A); a boring head (3) comprising a first support (3.1) with a second assembly face (3.11), a casing (3.3) arranged inside the first support (3.1), bearings (3.2) between the first support (3.1) and the casing (3.3), and a boring bar (3.4) inside the casing (3.3) capable of moving relative thereto; a milling head (4) comprising a third assembly face (4.11), a second support (4.1) and a second shaft (4.2); so that when the boring head (3) or the milling head (4) is mounted on the first carriage (1), the second (3.11) or third assembly face (4.11) is in contact with the first assembly face (1.11), **characterised in that** the second carriage (2) comprises rotation drive means with a first shaft (2.1), output shaft, with a working axis (W) parallel to the longitudinal axis (A) and a coupling (2.2) arranged at the end of the first shaft (2.1) oriented towards the first assembly face (1.11) of the first carriage (1), the boring bar (3.4) or the second shaft (4.2) is aligned with the first shaft (2.1) and its working axis (W), and the coupling (2.2) is configured to be able to be attached directly to the boring bar (3.4) of the boring head (3) or the second shaft (4.2) of the milling head (4).

2. Hybrid machine tool according to claim 1 wherein the guide means (1.1) are a friction guide, a hydrostatic guide, an aerostatic guide or a rolling guide.

3. Hybrid machine tool according to claim 2 wherein the rolling guide comprises one or more ball or roller recirculation rails with their corresponding runners.

4. Hybrid machine tool according to claim 1 wherein the rotation drive means are a motor directly connected to the first shaft (2.1).

5. Hybrid machine tool according to claim 4 wherein the electrical configuration of the motor corresponds to a single motor or to several motors connected in parallel.

6. Hybrid machine tool according to claim 1 wherein the rotation drive means are a motor with a gearbox.

7. Hybrid machine tool according to claim 1 wherein the rotation drive means are several motors in parallel.

8. Hybrid machine tool according to claim 1 wherein the coupling (2.2) is torsionally and axially rigid, with radial flexibility to absorb misalignments between the first shaft (2.1) and the boring bar (3.4) or the second shaft (4.2).

9. Hybrid machine tool according to claim 1 wherein the outer profile of the boring bar (3.4), as well as the inner profile of the casing (3.3), is a trilobular profile.

10. Hybrid machine tool according to claim 1 wherein the first carriage (1), the boring head (3) and the milling head (4) are adapted to join the latter two to the first carriage (1) by means of automatic fastening means.

11. Hybrid machine tool according to claim 1 wherein the first carriage (1), the boring head (3) and the milling head (4) are adapted to join the latter two to the first carriage (1) by means of automatic electrical connection means.

12. Hybrid machine tool according to claim 1 wherein the first carriage (1), the boring head (3) and the milling head (4) are adapted to join the latter two to the first carriage (1) by means of automatic pneumatic and/or hydraulic connection means.

13. Hybrid machine tool according to claim 1 wherein the first assembly face (1.11) of the first carriage (1), the second assembly face (3.11) of the first support (3.1) of the boring head (3) and the third assembly face (4.11) of the milling head (4) are provided with Hirth teeth, arranged circumferentially and equidistant from the longitudinal axis (A), so that they allow the centring of the boring head (3) and the milling head (4) with respect to the first carriage (1).

## Patentansprüche

1. Hybride Werkzeugmaschine für Fräs- und Bohrwerke, die einen ersten Schlitten (1), der zu einer Bewegung in mindestens einer der drei Achsen X, Y, Z in der Lage ist, mit einer ersten Kopfanordnungsfläche (1.11) und einer Längsachse (A), einen zweiten Schlitten (2), der in dem ersten Schlitten (1) angeordnet ist, umfasst, wobei der erste Schlitten (1) mindestens Führungsmittel (1.1) umfasst, die parallel zu der Längsachse (A) angeordnet sind, wobei der zweite Schlitten (2) auf den Führungsmitteln (1.1) entlang der Richtung der Längsachse (A) bewegt werden kann; einen Bohrkopf (3), umfassend eine erste Halterung (3.1) mit einer zweiten Anordnungsfläche (3.11), ein Gehäuse (3.3), das im Inneren der ersten Halterung (3.1) angeordnet ist, Lager (3.2) zwischen der ersten Halterung (3.1) und dem Gehäuse (3.3) und eine Bohrstange (3.4) im Inneren des Gehäuses (3.3), die sich relativ zu diesem bewegen kann; einen Fräskopf (4), umfassend eine dritte Anordnungsfläche (4.11), eine zweite Halterung (4.1) und eine zweite Welle (4.2); sodass, wenn der Bohrkopf (3) oder der Fräskopf (4) auf dem ersten Schlitten (1) montiert ist, die zweite (3.11) oder dritte Anordnungsfläche (4.11) mit der ersten Anordnungsfläche (1.11) in Kontakt ist, **dadurch gekennzeichnet, dass** der zweite Schlitten (2) Rotationsantriebsmittel mit einer ersten Welle (2.1), einer Ausgangswelle, mit einer Arbeitsachse (W) parallel zur Längsachse (A) und einer Kupplung (2.2) aufweist, die am Ende der ersten Welle (2.1) angeordnet und zur ersten Anordnungsfläche (1.11) des ersten Schlittens (1) hin ausgerichtet ist, die Bohrstange (3.4) oder die zweite Welle (4.2) mit der ersten Welle (2.1) und ihrer Arbeitsachse (W) fluchtet und die Kupplung (2.2) so konfiguriert ist, dass sie direkt an der Bohrstange (3.4) des Bohrkopfes (3) oder der zweiten Welle (4.2) des Fräskopfes (4) angebracht werden kann.

2. Hybride Werkzeugmaschine nach Anspruch 1, wobei die Führungsmittel (1.1) eine Reibungsführung, eine hydrostatische Führung, eine aerostatische Führung oder eine Rollführung sind.

3. Hybride Werkzeugmaschine nach Anspruch 2, wobei die Rollführung eine oder mehrere Kugel- oder Rollenumlaufschienen mit ihren entsprechenden Kufen umfasst.

4. Hybride Werkzeugmaschine nach Anspruch 1, wobei die Rotationsantriebsmittel ein Motor sind, der direkt mit der ersten Welle (2.1) verbunden ist.

5. Hybride Werkzeugmaschine nach Anspruch 4, wobei die elektrische Konfiguration des Motors einem einzelnen Motor oder mehreren parallel geschalteten Motoren entspricht.

6. Hybride Werkzeugmaschine nach Anspruch 1, wobei die Rotationsantriebsmittel ein Motor mit einem Getriebe sind.

7. Hybride Werkzeugmaschine nach Anspruch 1, wobei die Rotationsantriebsmittel mehrere parallel geschaltete Motoren sind.

8. Hybride Werkzeugmaschine nach Anspruch 1, wobei die Kupplung (2.2) torsions- und axialsteif ist und eine radiale Flexibilität aufweist, um Fluchtungsfehler zwischen der ersten Welle (2.1) und der Bohrstange (3.4) oder der zweiten Welle (4.2) auszugleichen.

9. Hybride Werkzeugmaschine nach Anspruch 1, bei der das Außenprofil der Bohrstange (3.4) ebenso wie das Innenprofil des Gehäuses (3.3) ein trilobulares Profil ist.

10. Hybride Werkzeugmaschine nach Anspruch 1, wobei der erste Schlitten (1), der Bohrkopf (3) und der Fräskopf (4) dazu angepasst sind, die beiden zuletzt genannten mittels automatischer Befestigungsmittel mit dem ersten Schlitten (1) zu verbinden.

11. Hybride Werkzeugmaschine nach Anspruch 1, wobei der erste Schlitten (1), der Bohrkopf (3) und der Fräskopf (4) dazu angepasst sind, die beiden zuletzt genannten mittels automatischer elektrischer Verbindungsmittel mit dem ersten Schlitten (1) zu verbinden.

12. Hybride Werkzeugmaschine nach Anspruch 1, wobei der erste Schlitten (1), der Bohrkopf (3) und der Fräskopf (4) dazu angepasst sind, die beiden zuletzt genannten mittels automatischer pneumatischer und/oder hydraulischer Verbindungsmittel mit dem ersten Schlitten (1) zu verbinden.

13. Hybride Werkzeugmaschine nach Anspruch 1, wobei die erste Anordnungsfläche (1.11) des ersten Schlittens (1), die zweite Anordnungsfläche (3.11) der ersten Halterung (3.1) des Bohrkopfs (3) und die dritte Anordnungsfläche (4.11) des Fräskopfs (4) mit Hirth-Verzahnungen versehen sind, die in Umfangsrichtung und in gleichem Abstand zur Längsachse (A) angeordnet sind, sodass sie das Zentrieren des Bohrkopfs (3) und des Fräskopfs (4) in Bezug auf den ersten Schlitten (1) zulassen.

## Revendications

1. Machine-outil hybride pour fraiser et aléser qui comprend un premier chariot (1) mobile selon au moins un des trois axes X, Y, Z, avec une première face d'assemblage de tête (1.11) et un axe longitudinal (A), un deuxième chariot (2) disposé dans le premier chariot (1), le premier chariot (1) comprend au moins des moyens de guidage (1.1) disposés parallèlement à l'axe longitudinal (A), le deuxième chariot (2) peut se déplacer sur les moyens de guidage (1.1) le long de la direction de l'axe longitudinal (A) ; une tête d'alésage (3) comprenant un premier support (3.1) avec une deuxième face d'assemblage (3.11), un carter (3.3) disposé à l'intérieur du premier support (3.1), des paliers (3.2) entre le premier support (3.1) et le carter (3.3), et une barre d'alésage (3.4) à l'intérieur du carter (3.3) mobile par rapport à celui-ci ; une tête de fraisage (4) comprenant une troisième face d'assemblage (4.11), un deuxième support (4.1) et un deuxième arbre (4.2) ; de sorte que lorsque la tête d'alésage (3) ou la tête de fraisage (4) est montée sur le premier chariot (1), la deuxième (3.11) ou la troisième face d'assemblage (4.11) est en contact avec la première face d'assemblage (1.11), **caractérisée en ce que** le deuxième chariot (2) comprend des moyens d'entraînement en rotation avec un premier arbre (2.1), un arbre de sortie, d'axe de travail (W) parallèle à l'axe longitudinal (A) et un accouplement (2.2) disposé à l'extrémité du premier arbre (2.1) orienté vers la première face d'assemblage (1.11) du premier chariot (1), la barre d'alésage (3.4) ou le deuxième arbre (4.2) est aligné avec le premier arbre (2.1) et son axe de travail (W), et l'accouplement (2.2) est configuré pour pouvoir être fixé directement sur la barre d'alésage (3.4) de la tête d'alésage (3) ou le deuxième arbre (4.2) de la tête de fraisage (4).

2. Machine-outil hybride selon la revendication 1 dans laquelle les moyens de guidage (1.1) sont un guidage à friction, un guidage hydrostatique, un guidage aérostatique ou un guidage à roulement.

3. Machine-outil hybride selon la revendication 2 dans laquelle le guide à roulement comprend un ou plusieurs rails de recirculation de billes ou de galets avec leurs patins correspondants.

4. Machine-outil hybride selon la revendication 1 dans laquelle les moyens d'entraînement en rotation sont un moteur directement connecté au premier arbre (2.1).

5. Machine-outil hybride selon la revendication 4 dans laquelle la configuration électrique du moteur correspond à un seul moteur ou à plusieurs moteurs connectés en parallèle.

6. Machine-outil hybride selon la revendication 1 dans laquelle les moyens d'entraînement en rotation sont un moteur avec un réducteur.

7. Machine-outil hybride selon la revendication 1 dans laquelle les moyens d'entraînement en rotation sont plusieurs moteurs en parallèle.

8. Machine-outil hybride selon la revendication 1 dans laquelle l'accouplement (2.2) est rigide en torsion et axialement, avec une souplesse radiale pour absorber les désalignements entre le premier arbre (2.1) et la barre d'alésage (3.4) ou le deuxième arbre (4.2).

9. Machine-outil hybride selon la revendication 1 dans laquelle le profil extérieur de la barre d'alésage (3.4), ainsi que le profil intérieur du carter (3.3), est un profil trilobulaire.

10. Machine-outil hybride selon la revendication 1 dans laquelle le premier chariot (1), la tête d'alésage (3) et la tête de fraisage (4) sont adaptés pour solidariser ces deux dernières au premier chariot (1) au moyen de moyens de fixation automatique.

11. Machine-outil hybride selon la revendication 1 dans laquelle le premier chariot (1), la tête d'alésage (3) et la tête de fraisage (4) sont adaptés pour relier ces deux dernières au premier chariot (1) au moyen de moyens de connexion électrique automatique.

12. Machine-outil hybride selon la revendication 1 dans laquelle le premier chariot (1), la tête d'alésage (3) et la tête de fraisage (4) sont adaptés pour relier ces deux dernières au premier chariot (1) au moyen d'automatismes pneumatiques et/ou de moyens de connexion hydraulique.

13. Machine-outil hybride selon la revendication 1 dans laquelle la première face d'assemblage (1.11) du premier chariot (1), la deuxième face d'assemblage (3.11) du premier support (3.1) de la tête d'alésage (3) et la troisième face d'assemblage (4.11) de la tête de fraisage (4) sont munies de dents de Hirth, disposées circonférentiellement et équidistantes de l'axe longitudinal (A), de sorte qu'elles permettent le centrage de la tête d'alésage (3) et de la tête de fraisage (4) par rapport au premier chariot (1).
